# EUROPÄISCHE PATENTANMELDUNG

(11) **EP 3 093 514 A1**
(43) Veröffentlichungstag der Anmeldung: **16.11.2016**
(21) Anmeldenummer: 15167381.1
(22) Anmeldetag: 12.05.2015
(51) Int. Cl.: F16C 33/10, F16C 17/02

(54) **RADIALGLEITLAGER MIT VERSETZTEN SCHMIERTASCHEN**

(71) Anmelder: Siemens Aktiengesellschaft, 80333 München (DE)
(72) Erfinder: Meyer, Thomas, 52223 Stolberg (DE)

(57) **Zusammenfassung**

Die Erfindung betrifft ein Radialgleitlager mit einem kreisring- oder kreisringsegmentförmigen Lagerkörper, an dessen radial innerer und/oder radial äußerer Umfangsfläche eine Gleitfläche ausgebildet ist, in der wenigstens zwei Schmiertaschen zum Verteilen von Schmierstoff auf der Gleitfläche ausgebildet sind, die in der Axialrichtung des Radialgleitlagers beabstandet nebeneinander angeordnet sind, wobei die wenigstens zwei Schmiertaschen in der Umfangsrichtung des Radialgleitlagers zueinander versetzt angeordnet sind.

## Beschreibung

Die Erfindung betrifft ein Radialgleitlager mit einem kreisring- oder kreisringsegmentförmigen Lagerkörper, an dessen radial innerer und/oder radial äußerer Umfangsfläche eine Gleitfläche ausgebildet ist, an der wenigstens zwei Schmiertaschen zum Verteilen von Schmierstoff auf der Gleitfläche ausgebildet sind, die in der Axialrichtung des Radialgleitlagers beabstandet nebeneinander angeordnet sind.

Derartige Radialgleitlager sind im Stand der Technik in unterschiedlichsten Ausgestaltungen bekannt und dienen insbesondere zum Führen rotierender Maschinenteile. Ein Radialgleitlager umfasst einen Lagerkörper, an dem eine Gleitfläche derart ausgebildet ist, dass sie mit einem rotierenden Maschinenteil während dessen Rotation dauerhaft in unmittelbarem Kontakt steht. Bei der Rotation des Maschinenteils in dem Radialgleitlager tritt zwischen der Gleitfläche und dem Maschinenteil unvermeidlich Gleitreibung auf, die der Rotation des Maschinenteils ein Drehmoment entgegen setzt. Dessen Überwindung erfordert Energie, die in Wärme umgewandelt wird, wodurch sich das Radialgleitlager und das Maschinenteil erhitzen. Zudem wird durch die Gleitreibung Oberflächenmaterial von der Gleitfläche und dem Maschinenteil abgetragen. Durch die Erhitzung und den Materialabtrag kann das Radialgleitlager und das Maschinenteil bei fortgesetztem Betrieb allmählich verschleißen.

Erhitzung und Verschleiß lassen sich allerdings reduzieren bzw. vermeiden, wenn reibungsarme Materialien für die Gleitfläche und/oder das Maschinenteil verwendet werden, und/oder ein flüssiger Schmierstoff in den Zwischenraum zwischen der Gleitfläche und dem Maschinenteil eingebracht wird. Der Schmierstoff erzeugt einen Flüssigkeitsfilm zwischen der Gleitfläche und dem Maschinenteil, wodurch statt der Trockenreibung die wesentlich geringere Flüssigkeitsreibung wirkt. Geschmierte Radialgleitlager lassen sich in hydrostatische und hydrodynamische Radialgleitlager unterteilen.

Hydrostatische Radialgleitlager benötigen bereits zum Anlaufen einen vollständigen Schmierfilm zwischen der Gleitfläche und dem Maschinenteil, der durch eine Pumpe realisiert wird. Zwar sind hydrostatische Radialgleitlager frei von Anlaufreibung und äußerst verschleißarm. Jedoch erfordern sie aufwändige Konstruktionen, insbesondere der Schmierstoffzuführung, sowie spezielle drucktolerante Schmierstoffe wie beispielsweise Hochdrucköl. Hydrodynamische Radialgleitlager dagegen bauen den erforderlichen Schmierfilm zwischen der Gleitfläche und dem Maschinenteil erst durch die Rotation des Maschinenteils selbst auf.

Wenn sich beispielsweise eine Welle exzentrisch in einem hydrodynamischen Radialgleitlager dreht, erzeugt sie durch den sich verengenden keilförmigen axialen Querschnitts des Zwischenraums zwischen der Welle und der Gleitfläche eine Schubspannung im Schmierstoff. Dadurch entsteht im Schmierstoff eine hydrodynamische Druckverteilung, die wiederum auf die Welle eine Kraft ausübt. Ist die Gegenkraft zu der von außen wirkenden Lagerkraft (Gewichtskraft der Welle) groß genug, trennt sich die Welle durch Aufschwimmen auf dem Schmiermittel von der Gleitfläche. Daher müssen hydrodynamische Radialgleitlager eine Mindestdrehzahl erreichen, um einen ausreichenden Schmierfilm zu bilden.

Demnach lassen sich bei einem hydrodynamischen Radialgleitlager insgesamt vier Betriebsbereiche unterscheiden. Im Stillstand bzw. während des Anfahrens mit niedriger Drehzahl der Welle berühren sich die Welle und die Gleitfläche des Radialgleitlagers. Mit zunehmender Drehzahl der Welle wird der Schmierfilm tragfähiger und das Radialgleitlager geht in einen Übergangsbetrieb über, in welchem eine Mischung aus Trockenreibung und Flüssigkeitsreibung (sog. Mischreibung) vorherrscht. Oberhalb einer bestimmten Drehzahl der Welle liegt der volltragenden Betriebsbereich des Radialgleitlagers, in dem nur noch Flüssigkeitsreibung und somit geringer Verschleiß auftritt. Ein hydrodynamisches Radialgleitlager kann den tragenden Schmierfilm allerdings nur bei exzentrischem Lauf aufbauen und aufrechterhalten.

Die Versorgung eines Radialgleitlagers mit Schmierstoff erfolgt in bekannter Weise durch wenigstens einen Schmierstoffzuführkanal, der als Bohrung in dem Lagerkörper des Radialgleitlagers ausgeformt sein kann und diesen durchsetzt. Um eine bessere Verteilung des Schmierstoffes auf der Gleitfläche des Radialgleitlagers zu bewirken, ist eine Schmiertasche in Form einer Ausnehmung in der Gleitfläche vorgesehen, in welche der Schmierstoffzuführkanal mündet. Dabei erstreckt sich die Schmiertasche vorteilhaft im Wesentlichen quer zu der Rotationsrichtung des Maschinenteils, um einen möglichst breiten Schmierfilm auf der Gleitfläche aufzubauen.

Radialgleitlager werden aufgrund Ihrer vorteilhaften Eigenschaften unter anderem in Übersetzungsgetrieben verbaut. Übersetzungsgetriebe übersetzen die Drehzahl einer Antriebswelle in eine höhere Drehzahl einer Abtriebswelle. Derartige Übersetzungsgetriebe werden beispielsweise in Windkraftanlagen verbaut, um die relativ geringe Drehzahl des Rotors in eine deutlich höhere Drehzahl des Generators zu übersetzen. Derartige Windkraftgetriebe sind üblicherweise mehrstufig aufgebaut, um das erforderliche Übersetzungsverhältnis zu erreichen.

Die Radialgleitlager in den Übersetzungsgetrieben von Windkraftanlagen weisen aufgrund der windabhängig sehr variablen Drehzahlen einen besonders hohen Anteil von Mischreibung auf. Der daraus resultierende starke Verschleiß erfordert eine häufige Wartung, Reinigung und Instandsetzung der Radialgleitlager, was zu entsprechenden Stillstandszeiten der Windkraftanlagen führt.

Bei sehr breiten Radialgleitlagern ist es erforderlich, zwei oder mehr Schmiertaschen in der Axialrichtung des Radialgleitlagers beabstandet nebeneinander anzuordnen, damit eine Verteilung des Schmierstoffs über die gesamte Breite der Gleitfläche sichergestellt wird. Ein derartiges breites Radialgleitlager wird in der Druckschrift EP 2 383 480 B1 vorgeschlagen und ist in der Figur 1 gezeigt.

Wenn die in dem Radialgleitlager gelagerten Getriebezahnräder eine Schrägverzahnung aufweisen, ergibt sich auf der Gleitfläche des Radialgleitlagers eine dynamische Druckverteilung, die gegenüber dessen Axialrichtung geneigt ist. Die Neigung kann dazu führen, dass nicht nur bei Überlastsituationen der Schmierstoff nicht gleichmäßig aus den Schmiertaschen auf die Gleitfläche verteilt wird, da der Zwischenraum zwischen der Gleitfläche und dem rotierenden Getriebezahnrad an den Schmiertaschenpositionen unterschiedlich ist. Wenn aus einer Schmiertasche nicht genügend Schmierstoff auf benachbarte Bereiche der Gleitfläche verteilt wird, entsteht in diesen Bereichen kein ausreichend tragfähiger Schmierfilm, was eine deutliche Tragfähigkeitsminderung des Radialgleitlagers nach sich zieht.

Ausgehend von diesem Stand der Technik ist eines eine Aufgabe der vorliegenden Erfindung, ein verschleißarmes Radialgleitlager zu schaffen.

Die Aufgabe wird erfindungsgemäß durch ein Radialgleitlager der eingangs genannten Art gelöst, bei dem die wenigstens zwei Schmiertaschen in der Umfangsrichtung des Radialgleitlagers zueinander versetzt angeordnet sind.

Der Erfindung liegt somit die Idee zugrunde, die wenigstens zwei Schmiertaschen in der Gleitfläche des Radialgleitlagers derart zu positionieren, dass an den Schmiertaschenpositionen im Betrieb des Radialgleitlagers die Zwischenräume zwischen der Gleitfläche und dem rotierenden Maschinenteil jeweils gleich groß sind. Wenn die exzentrische Rotationsachse des Maschinenteils beispielsweise infolge einer Schrägverzahnung gegenüber der Axialrichtung des Gleitlagers geneigt ist, entsteht eine ungleichmäßige, insbesondere gewundene dynamische Lastverteilung auf der Gleitfläche. Dies führt an den besonders belasteten Stellen der Gleitfläche zu dynamisch verringerten Zwischenräumen zwischen der Gleitfläche und dem rotierenden Maschinenteil. Durch eine in Umfangsrichtung versetzte Anordnung der wenigstens zwei Schmiertaschen lässt sich auch für diesen Fall erreichen, dass aus jeder der wenigstens zwei Schmiertaschen jeweils gleich viel Schmierstoff auf die Gleitfläche verteilt, was einer gleichmäßigen Schmierung des Radialgleitlagers zuträglich ist.

Bevorzugt besitzt jede Schmiertasche eine längliche, insbesondere rechteckige Form, wobei sich die Längsrichtung der Schmiertasche in der Axialrichtung des Radialgleitlagers erstreckt. Mit dieser Formgebung und Anordnung der Schmiertaschen lässt sich auch eine breite Gleitfläche mit relativ wenigen Schmiertaschen versorgen.

Gemäß einer Variante der vorliegenden Erfindung besitzt jede Schmiertasche eine längliche, insbesondere rechteckige Form, wobei die Längsrichtung der Schmiertasche gegenüber der Axialrichtung des Radialgleitlagers um einen vorgegebenen Winkel zwischen 20° und 70° geneigt ist. Mit einer solchen Neigung der Längsrichtungen der Schmiertaschen ist eine optimale Anpassung an solche Lastverteilungen auf der Gleitfläche möglich, die gegenüber der Axialrichtung des Radialgleitlagers um einen Winkel zwischen 20° und 70° geneigt sind.

Alternativ ist es möglich, die beiden diagonal angestellten Schmiertaschen miteinander zu verbinden, so dass nur eine einzige längliche Schmiertasche gebildet wird. Entsprechend ist die vorstehend angegebene Aufgabe ferner gelöst durch ein Radialgleitlager mit einem kreis- oder kreisringsegmentförmigen Lagerkörper, an dessen radial innerer und/oder radial äußerer Umfangsfläche eine Gleitfläche ausgebildet ist, in der eine Schmiertasche zum Verteilen von Schmierstoff auf der Gleitfläche ausgebildet ist, das dadurch gekennzeichnet ist, dass die Schmiertasche eine längliche, insbesondere rechteckige Form besitzt, wobei die Längsrichtung der Schmiertasche gegenüber der Axialrichtung des Radialgleitlagers um einen vorgegebenen Winkel α zwischen 20° und 70° geneigt ist

Bevorzugt sind die wenigstens zwei Schmiertaschen derart angeordnet, dass ihre Längsmittelachsen kollinear sind. Dies bietet insbesondere Vorteile bei dem Ausbilden der Schmiertaschen.

In einer Weiterbildung der vorliegenden Erfindung sind die Längsrichtungen der wenigstens zwei Schmiertaschen kollinear. So lassen sich die Schmiertaschenposition optimal an eine gegenüber der Axialrichtung des Radialgleitlagers geneigte Lastverteilung anpassen. Zudem entstehen weitere Vorteile bei dem Ausbilden der Schmiertaschen.

In Weiterbildung der vorliegenden Erfindung ist jede Schmiertasche in einem Bereich der Gleitfläche angeordnet, der im Betrieb des Radialgleitlagers nur wenig belastet ist. Dadurch wird sichergestellt, dass das kontinuierliche und gleichmäßige Verteilen von Schmierstoff aus den Schmiertaschen auf die Gleitfläche nicht durch entgegenwirkende Kräfte bzw. einen kleinen Zwischenraum zwischen der Gleitfläche und dem rotierenden Maschinenteil beeinträchtigt ist.

Bei einem erfindungsgemäßen Radialgleitlager ist jeder Schmiertasche ein Schmierstoffzuführkanal zugeordnet, der den Lagerkörper durchsetzt und dazu ausgebildet ist, der zugeordneten Schmiertasche Schmierstoff zuzuführen. Vorteilhaft ist jeder Schmierstoffzuführkanal in dem Lagerkörper derart angeordnet, dass er in einen mittleren Bereich der zugeordneten Schmiertasche mündet. Eine mittige Mündung eines Schmierstoffzuführkanals in die zugeordnete Schmiertasche gewährleistet eine gleichmäßige Befüllung der Schmiertasche mit Schmierstoff, was einer gleichmäßigen Verteilung des Schmierstoffs auf der Gleitfläche zuträglich ist.

Weitere Merkmale und Vorteile der vorliegenden Erfindung werden anhand der nachfolgenden Beschreibung zweier Ausführungsformen des erfindungsgemäßen Radialgleitlagers unter Bezugnahme auf die beiliegende Zeichnung deutlich. Darin sind
- Figur 1: eine perspektivische Ansicht eines Radialgleitlagers gemäß dem Stand der Technik;
- Figur 2: eine perspektivische Ansicht eines Radialgleitlagers gemäß einer ersten Ausführungsform der vorliegenden Erfindung;
- Figur 3: eine perspektivische Ansicht eines Radialgleitlagers gemäß einer zweiten Ausführungsform der vorliegenden Erfindung;
- Figur 4: eine schematische Ansicht einer gewundenen Lastverteilung auf der Gleitfläche eines Radialgleitlagers, wobei auf der Gleitfläche zwei Schmiertaschen gemäß dem in Figur 1 dargestellten Stand der Technik angeordnet sind;
- Figur 5: eine schematische Ansicht der in Figur 4 dargestellten Lastverteilung auf der Gleitfläche, wobei auf der Gleitfläche zwei Schmiertaschen gemäß der in Figur 2 dargestellten ersten Ausführungsform der vorliegenden Erfindung angeordnet sind; und
- Figur 6: eine schematische Ansicht der in Figur 4 dargestellten Lastverteilung auf der Gleitfläche, wobei auf der Gleitfläche zwei Schmiertaschen gemäß der in Figur 3 dargestellten zweiten Ausführungsform der vorliegenden Erfindung angeordnet sind.

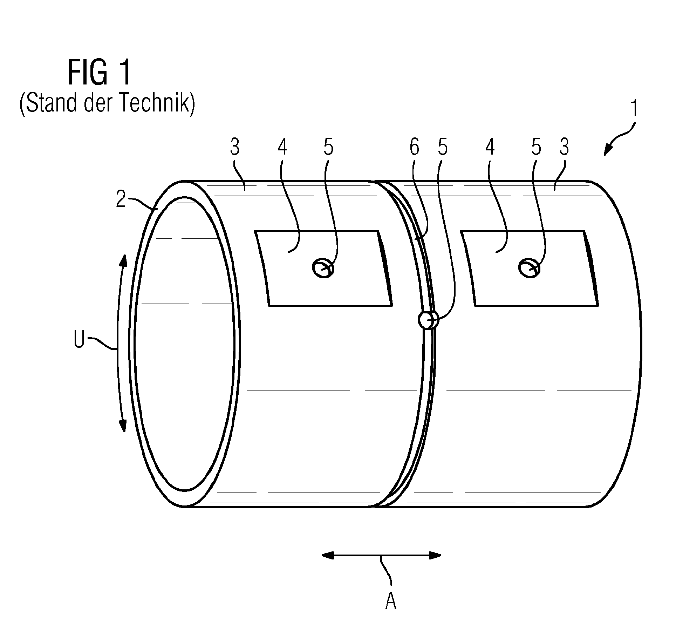

In den Figuren 1 bis 3 sind Radialgleitlager 1 dargestellt, die einen kreisringförmigen Lagerkörper 2 umfassen, an dessen radial äußerer Umfangsfläche eine Gleitfläche 3 ausgebildet ist. In der Gleitfläche 3 sind zum Verteilen von Schmierstoff auf der Gleitfläche 3 jeweils zwei rechteckige Schmiertaschen 4 ausgebildet, die in der Axialrichtung A des Radialgleitlagers 1 beabstandet nebeneinander angeordnet sind. Jeder Schmiertasche 4 ist ein Schmierstoffzuführkanal 5 zugeordnet, der den Lagerkörper 2 durchsetzt und dazu ausgebildet ist, der zugeordneten Schmiertasche 4 Schmierstoff zuzufügen. Dazu ist jeder Schmierstoffzuführkanal 5 in dem Lagerkörper 2 derart angeordnet, dass er in einen mittleren Bereich der zugeordneten Schmiertasche 4 mündet. Weiterhin ist in der Gleitfläche eine in Umfangsrichtung U umlaufende Schmiernut 6 vorgesehen, der ein weiterer Schmierstoffzuführkanal 5 zugeordnet ist. Diese Schmiernut 6 und der zugeordnete Schmierstoffzuführkanal 5 sind allerdings nicht wesentlich für die vorliegende Erfindung.

Die Figur 1 zeigt ein Radialgleitlager 1, das aus dem Stand der Technik bekannt ist. Bei diesem Radialgleitlager 1 erstrecken sich die Längsrichtungen der Schmiertaschen 4 genau in der Axialrichtung A des Radialgleitlagers 1, wobei die Längsmittelachsen der zwei Schmiertaschen 4 kollinear sind.

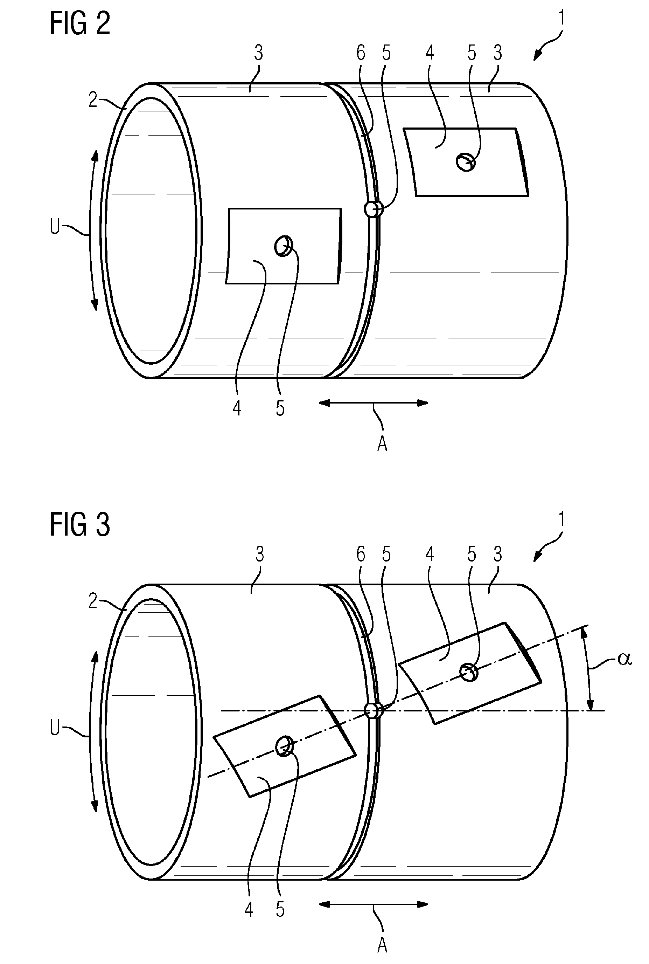

Die Figur 2 zeigt dagegen ein Radialgleitlager gemäß einer ersten Ausführungsform der vorliegenden Erfindung, bei dem die beiden Schmiertaschen 4 in der Umfangsrichtung U des Radialgleitlagers 1 zueinander versetzt angeordnet sind. Die Längsmittelachsen der beiden Schmiertaschen 4 erstrecken sich parallel zu einander

Die Figur 3 zeigt ein Radialgleitlager 1 gemäß einer zweiten Ausführungsform der vorliegenden Erfindung, bei dem die Längsmittelachsen der beiden Schmiertaschen 4 zusätzlich um denselben Winkel α gegenüber der Axialrichtung des Radialgleitlagers 1 geneigt und darüber hinaus kollinear sind. Der Winkel α beträgt ca. 30°, kann aber in einem Bereich zwischen 20° und 70° liegen.

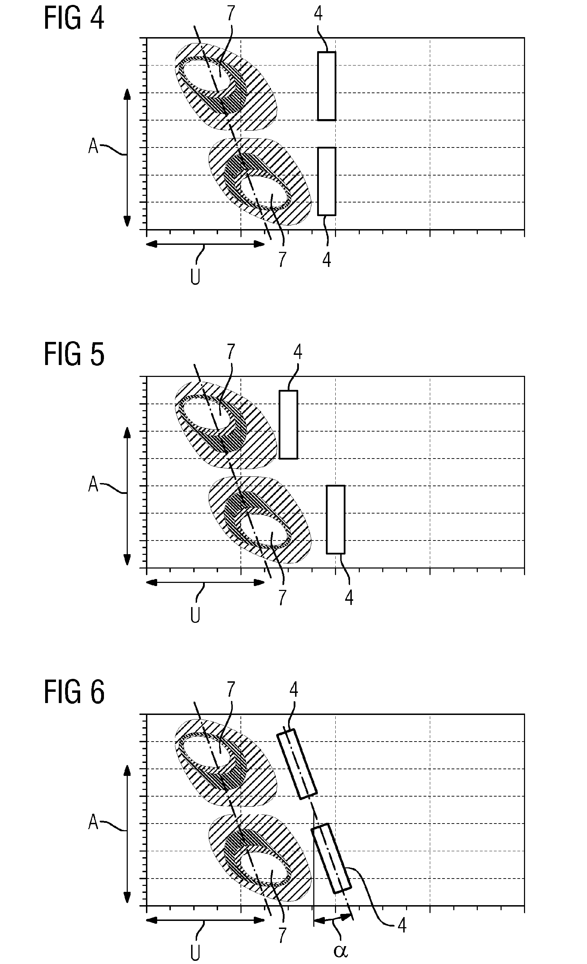

Die Figuren 4 bis 6 zeigen jeweils dieselbe Lastverteilung auf einer Gleitfläche 3 des Radialgleitlagers 1, die beispielsweise aufgrund einer Schrägverzahnung eines auf dem Radialgleitlager gelagerten Zahnrads (nicht gezeigt) eine ungleichmäßige Lastverteilung und insbesondere zwei Bereiche 7 maximaler Last aufweist. Die Bereiche 7 maximaler Last sind in der Axialrichtung A des Gleitlagers beabstandet nebeneinander angeordnet. In der Umfangsrichtung U des Radialgleitlagers 1 sind die Bereiche 7 maximaler Last versetzt angeordnet, wodurch sich eine in der Axialrichtung A gewundene Lastverteilung ergibt. Weiterhin sind in die Figuren 4 bis 6 jeweils zwei Schmiertaschen derart positioniert, dass sie den in den Figuren 1 bis 3 dargestellten Ausführungsformen eines Radialgleitlagers 1 entsprechen. Dabei entspricht die Figur 4 der Figur 1, die Figur 5 der Figur 2 und die Figur 6 der Figur 3.

Die in der Figur 4 gezeigten Schmiertaschenpositionen entsprechen denen des in der Figur 1 dargestellten Radialgleitlagers 1 gemäß dem Stand der Technik. Die beiden Schmiertaschen 4 sind von den Bereichen 7 maximaler Last unterschiedlich weit entfernt. Dies führt im Betrieb des Radialgleitlagers 1 dazu, dass die Verteilung von Schmierstoff auf die Gleitfläche 3 aus derjenigen Schmiertasche 4 geringer ist, die näher an einem Bereich 7 maximaler Last liegt, da dort der Zwischenraum zwischen der Gleitfläche und dem gelagerten Maschinenteil kleiner ist. Der daraus resultierende dünnere Schmierfilm begünstigt einen Verschleiß des Radialgleitlagers 1.

Aus Figur 5 ist ersichtlich, dass durch ein Versetzen der Schmiertaschen 4 in der Umfangsrichtung U des Radialgleitlagers 1 erreicht werden kann, dass jede Schmiertasche 4 im Wesentlichen gleich weit von einem Bereich 7 maximaler Last entfernt ist. Diese Schmiertaschenposition entspricht dem in Figur 2 dargestellten Radialgleitlager. Allerdings sind verschiedene Bereiche entlang der Längsrichtung einer Schmiertasche 4 verschieden weit von einem Bereich 7 maximaler Last entfernt, weil die Bereiche 7 maximaler Last ihrerseits eine längliche Gestalt aufweisen und ihre Längsrichtung gegenüber der Axialrichtung A um einen bestimmten Winkel geneigt sind.

Die Figur 6 zeigt schließlich zwei Schmiertaschen 4 in einer Anordnung entsprechend der Figur 3. Die Schmiertaschen 4 sind in der Umfangsrichtung des Radialgleitlagers versetzt angeordnet, und ihre Längsmittelachsen sind gegenüber der Axialrichtung A um denselben Winkel α geneigt. Dabei entspricht der Winkel α etwa dem Neigungswinkel der Längsrichtungen der Bereiche 7 der maximalen Last gegenüber der Axialrichtung des Radialgleitlagers. Auf diese Weise sind sowohl beide Schmiertaschen 4 von den Bereichen 7 maximaler Last als auch verschiedene Bereiche einer Schmiertasche 4 von einem Bereich 7 maximaler Last gleich weit entfernt.

Ein Vorteil eines Radialgleitlagers gemäß der vorliegenden Erfindung liegt darin, dass durch versetzt und/oder geneigt angeordnete Schmiertaschen 4 eine gleichmäßige Verteilung von Schmierstoff auf der Gleitfläche 3 erreicht werden kann. Dies reduziert den Verschleiß des Radialgleitlagers 1, erlaubt längere Wartungsintervalle und erhöht die Lebensdauer des Radialgleitlagers 1.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Radialgleitlager (1) mit einem kreisring- oder kreisringsegmentförmigen Lagerkörper (2), an dessen radial innerer und/oder radial äußerer Umfangsfläche eine Gleitfläche (3) ausgebildet ist, in der wenigstens zwei Schmiertaschen (4) zum Verteilen von Schmierstoff auf der Gleitfläche (3) ausgebildet sind, die in der Axialrichtung (A) des Radialgleitlagers (1) beabstandet nebeneinander angeordnet sind, **dadurch gekennzeichnet, dass** die wenigstens zwei Schmiertaschen (4) in der Umfangsrichtung (U) des Radialgleitlagers (1) zueinander versetzt angeordnet sind.

2. Radialgleitlager (1) mit einem kreis- oder kreisringsegmentförmigen Lagerkörper (2), an dessen radial innerer und/oder radial äußerer Umfangsfläche eine Gleitfläche (3) ausgebildet ist, in der eine Schmiertasche (4) zum Verteilen von Schmierstoff auf der Gleitfläche (3) ausgebildet ist, **dadurch gekennzeichnet, dass** die Schmiertasche (4) eine längliche, insbesondere rechteckige Form besitzt, wobei die Längsrichtung der Schmiertasche (4) gegenüber der Axialrichtung (A) des Radialgleitlagers um einen vorgegebenen Winkel α zwischen 20° und 70° geneigt ist.

3. Radialgleitlager (1) nach Anspruch 1, **dadurch gekennzeichnet, dass** jede Schmiertasche (4) eine längliche, insbesondere rechteckige Form besitzt, wobei sich die Längsrichtung der Schmiertasche (4) in der Axialrichtung (A) des Radialgleitlagers (1) erstreckt.

4. Radialgleitlager (1) nach Anspruch 1, **dadurch gekennzeichnet, dass** jede Schmiertasche (4) eine längliche, insbesondere rechteckige Form besitzt, wobei die Längsrichtung der Schmiertasche (4) gegenüber der Axialrichtung (A) des Radialgleitlagers um einen vorgegebenen Winkel (α) zwischen 20° und 70° geneigt ist.

5. Radialgleitlager (1) nach Anspruch 4, **dadurch gekennzeichnet, dass** die Längsrichtungen der wenigstens zwei Schmiertaschen (4) um denselben Winkel gegenüber der Axialrichtung (A) des Radialgleitlagers (1) geneigt sind.

6. Radialgleitlager (1) nach Anspruch 5, **dadurch gekennzeichnet, dass** die wenigstens zwei Schmiertaschen (4) derart angeordnet sind, dass ihre Längsmittelachsen kollinear sind.

7. Radialgleitlager (1) nach einem der vorhergehenden Ansprüche, **dadurch gekennzeichnet, dass** jede Schmiertasche (4) in einem Bereich der Gleitfläche (3) angeordnet ist, der im Betrieb des Radialgleitlagers (1) nur wenig belastet ist.

8. Radialgleitlager (1) nach einem der vorhergehenden Ansprüche, **dadurch gekennzeichnet, dass** jeder Schmiertasche (4) ein Schmierstoffzuführkanal (5) zugeordnet ist, der den Lagerkörper (2) durchsetzt und dazu ausgebildet ist, der zugeordneten Schmiertasche (4) Schmierstoff zuzuführen.

9. Radialgleitlager (1) nach Anspruch 8, **dadurch gekennzeichnet, dass** jeder Schmierstoffzuführkanal (5) in dem Lagerkörper (2) derart angeordnet ist, dass er in einen mittleren Bereich der zugeordneten Schmiertasche (4) mündet.
